# EUROPEAN PATENT APPLICATION

(11) **EP 1 768 270 A1**
(43) Date of publication of application: **28.03.2007**
(21) Application number: 06019331.5
(22) Date of filing: 15.09.2006
(51) Int. Cl.: H04B 3/54

(54) **Data transmission over power supply line**

(30) Priority: 22.09.2005 GB 0519361
(71) Applicant: AMI Semiconductor Belgium BVBA, 9700 Oudenaarde (BE)
(72) Inventor: Vandensande, Geert, 3540 Berbroeck (Herk-de-stad) (BE); Van Herzeele, Geert, 1910 Kampenhout (BE)
(74) Representative: Bird, William Edward

(57) **Abstract**

A main station (1) for a system having one or more satellite stations (3) coupled by a power supply line (2), for sending data signals along the supply line. The main station supplies the satellite stations along the supply line, and has a receiver having a comparator (11). A current source (10) subtracts a part or the full supply current from the received signal before it is input to the comparator. By such subtraction of the power supply current, the received data signals are enhanced and the detection is made easier and more reliable in a noisy environment such as auto electronics. The current source is varied according to variations in the supply current of the satellite stations so that the remaining signal only represent the data signal sent by the satellite stations. The current source has an up down counter and a digital to analog converter to enable rate of change to be controlled.

## Description

**Field of the invention:** This invention relates to main stations for systems having satellite stations sending data transmissions to the main stations over a power supply line, to corresponding receivers, and methods of transmitting data.

### Description of the Related Art:

It is known to provide systems having integrated circuits distributed at different locations and communicating over a wire. To minimize the numbers of wires, it is known to provide signaling over the same wire as supplies power to the integrated circuits. Example applications are electronic systems in motor vehicles, such as passenger protective systems, such as airbags and belt tightening systems, local area networks (LAN), telephone lines and other cable systems in which the cable cannot be replaced easily, for example cables to offshore rigs. In an example case, one or more terminals or nodes of the network sometimes called "satellite stations" having sensors are coupled to a main station in an automotive vehicle. Such satellite stations transmit measured data to the main station when recognizing a condition or state (asynchronous mode), e.g. an impact or a danger of accident condition, or on request of the main-station (synchronous mode). The main station can then apply a control algorithm or carry out suitable actions based on the received data. The satellite station can also be arranged to transfer a heartbeat or other monitoring message periodically to the main station to indicate that the connection is still good.

From patent application DE 42 01 468 A1 a bus system with integrated voltage supply to users of the system is known. In order to achieve a constant voltage drop at the loaded bus, the modulation stream is reduced when several participants are sending at the same time. From patent US 4,621,170 a signal transmission system is known, in which signals are transmitted over a current supply line. For signal detection a comparator is used.

In EP 1 142 209 B1, data is exchanged between a satellite station and a main station over a data transmission line that also supplies power to the satellite station with a continuous idle voltage. The data is transmitted from the satellite station to the main station in the form of current pulses with a pre-specified amplitude overlaid over the idle current of the satellite. The main station demodulates the data signal by comparing the incoming signal current value with a reference value. That reference value is the sum of a basic component corresponding to the idle current value and a pre-specified pulse component. It is noted that due to filtering to suppress EMI, the overlaid current pulses lose their rectangular form, and so the pulse width output by the comparator can vary with the reference value. If the reference value is fixed, then fluctuations in the pulse width of the transferred signals can cause data errors. This document proposes to vary the reference to follow the varying quiescent current drawn by the satellite station, to improve reliability.

In the Airbag Satellite Receiver IC TLE7719-T, the incoming signal current is first mirrored before being sent to the comparators. While the amplitude of the current signal sent to the comparator is reduced by the mirror ratio, the ratio between the amplitude of the idle current and the amplitude of the current pulses remains unchanged. The idle current may be substantially higher than the amplitude of the current pulses. This is particularly so for system that uses a bus-configuration having many satellites on the same supply line. Several sensors can be connected to the same communication line which increases the idle current while the current-pulses keep the same amplitude.

### Summary of the Invention:

An object of the invention is to provide improved apparatus or methods for communications systems having main stations and satellite stations for sending data transmissions between the main and satellite stations over a power supply line, to provide corresponding receivers, and to provide methods of transmitting data. According to a first aspect, the invention provides: a system including a main station, the system having one or more satellite stations coupled by a power supply line, each satellite station having a circuit for sending pulsed data signals along the power supply line, the system having a DC power supply circuit for supplying the satellite stations along the supply line with a power supply signal, and the main station having a receiver for receiving the pulsed data signals on the supply line from the satellite stations, the receiver having a detector arranged to detect the pulsed data signals, characterized by the receiver having a circuit arranged to subtract at least some of the power supply signal from the received signal before it is input to the detector. The DC power supply circuit may be provided in the main station. The power supply circuit may be a DC current source. The satellite stations may be any type of terminal, node of a network, etc. The communication system may be arranged in any topology and the relationship between the main and satellite stations may be any suitable one, e.g. peer-to-peer or master/slave, etc.

The present invention also provides a main station for a system having one or more satellite stations coupled by a power supply line, each satellite station having a circuit for sending pulsed data signals along the power supply line, the main station having a DC power supply circuit for supplying the satellite stations along the supply line with a power supply signal, and the main station having a receiver for receiving the pulsed data signals on the supply line from the satellite stations, the receiver having a detector arranged to detect the pulsed data signals, characterized by the receiver having a circuit arranged to subtract at least some of the power supply signal from the received signal before it is input to the detector. The power supply circuit may be a DC current source.

By such subtraction of the power supply signal, the pulses are enhanced and the detection is made easier or more reliable, or more power can be supplied for a given detection reliability. This is particularly useful where there are many devices being supplied or where there is a noisy environment such as in auto electronics.

An additional feature for some embodiments is the detector comprising a comparator for comparing the data signal to a threshold.

This is suitable for amplitude modulated data, is simpler than other detectors such as correlators, and the reduction of the power supply signal enables the dynamic range of the comparator to be increased. This enables more noise immunity because the threshold level for the comparator can be chosen more optimally. The accuracy for some components can be relaxed to reduce costs e.g. offset for comparators

Another additional feature is that the subtractor comprises a current source coupled to the power supply circuit for subtracting a value representing a quiescent supply current from an input to the detector. This helps maximize the advantages set out above, and can be implemented with low complexity to keep costs low. Notably by separating the pulsed signal from the power supply current, greater immunity for EMI can be achieved since filtering can be more focused. The power supply signal stays at the input terminal of the circuit and is not mirrored to some internal node. These mirrors tend to rectify HF-disturbance and will corrupt the valid signal. The EMC-filtering is focused to the input terminal and not to the rest of the circuit. Other parts of the circuit can stay isolated from the noisy input-signals.

Another such additional feature is the current source being variable according to a current drawn by the satellite stations. This enables current fluctuations to be cancelled out to some degree, before the detector.

Another such additional feature is the current source comprising an up down counter and a digital to analog converter. This helps enable rate of change to be controlled more easily, which can reduce EMI emissions.

Another such additional feature is a test circuit coupled to the supply line for supplying a test data signal. This allows diagnosis of the receiver such as sensor-lines and the analog path of the sensor-interface.

Another such additional feature is the system being suitable for automotive use, and the main station being implemented as an integrated circuit.

Another such additional feature is a data signal transmitter arranged to modulate a command input to the power supply circuit to send data along the supply line to the satellite stations. This can enable two way communications along the same line.

The present invention also provides: a receiver for receiving the data signals on the supply line from the satellite stations, the receiver having a detector arranged to detect the data signals, characterized by the receiver having a circuit arranged to subtract at least some of the power supply signal from the received signal before it is input to the detector.

The present invention also provides, a method of using a system having a main station and one or more satellite stations coupled by a power supply line, the method comprising: supplying the satellite stations with DC power along the supply line from the main station, sending pulsed data signals from a satellite station along the supply line, receiving the pulsed data signals on the supply line at the main station, detecting the data signals, and subtracting at least some of the power supply signal from the received signal before it is input to the detecting step.

Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

### Brief Description of the Drawings:

How the present invention may be put into effect will now be described by way of example with reference to the appended drawings, in which:
FIG. 1 shows a first embodiment of the invention,
FIG. 2 shows another embodiment, and
FIG. 3 shows an arrangement of switches.

### Description of the Preferred Embodiments:

The scope of the claims of this invention is not limited to only the embodiments explicitly disclosed. Any reference signs do not limit the scope of the claims. The word "comprising" does not exclude the presence of other elements or steps than those listed in a claim. Use of the word "a" or "an" preceding an element does not exclude the presence of a plurality of such elements.

The present invention relates to communication systems and networks with main and satellite stations. For example, in automotive vehicle applications, the satellite stations transmit measured data to the main station when recognizing a condition or state (asynchronous mode), e.g. an impact or a danger of accident condition, or on request of the main-station (synchronous mode). The main station can then apply a control algorithm or carry out suitable actions based on the received data. The satellite station can also be arranged to transfer a heartbeat or other monitoring message periodically to the main station to indicate that the connection is still good. For detection of the pulsed data signal a comparator is used.

Embodiments of the present invention are based on a recognition that in some cases most of the dynamic range of the comparator used for demodulation is used up by the idle component of the current signal. To address this, a method and a circuit are shown, for transmitting data between a main station and a satellite station located remotely from the main station which is connected to the main station by a data transmission line. The network formed by the main and satellite stations may be of any suitable topology, e.g. in the form of a star with the main station being a main station and the satellite being located on arms of the star = star physical, for example a distributed star, a ring such as a token ring = ring physical, a bus with the main and satellites on branches = bus physical. The network may also be organized logically in any suitable way, e.g. bus logical, or ring logical and the main and satellites may be in a logical peer-to-peer relationship or in a logical dependent relationship such as master/slave. The present invention is not limited by the type of network to which it is applied, e.g. the network may be, for ex ample, a local area network (LAN), a Controller Area Network (CAN) a wide area network (WAN), a point-to-point network, a telephone network, etc. The present invention is not limited to any specific protocol that could be used to communicate the data between the different stations.

The satellite station is fed via the data transmission line with a continuous idle voltage and the data is transmitted in the form of current pulses, e.g. with a pre-specified amplitude which are overlaid on the idle current of the satellite. The idle component of the current is subtracted from the incoming signal current value in the main station and the result of the subtraction is compared to a reference value with the aid of a comparator, the reference value being a pre-specified part of the pulse amplitude. The idle current is evaluated in idle current phases by a regulation circuit.

Some embodiments are particularly well adapted to circuit implementations where one wants to maximize the design headroom for the various components and in particular the comparator used for the data demodulation. Indeed, by isolating the current pulses, a designer will not have to deal with the voltage drops generated by the idle current component e.g. at the input of the comparator in the known TLE7719-T system or at the input of the amplifier in the circuit proposed in EP 1 142 209 B1 as discussed above. Once the current pulses are isolated from the total current flowing through the transmission line, it becomes possible to optimize the overdrive of the comparator e.g. by using larger resistor values.

By isolating the current pulses from the idle current component, there can be an improvement in signal to noise ratio without impact on the power dissipation. Indeed, in the TLE7719-T Airbag Satellite Receiver IC, the incoming signal current is mirrored and divided by 200 before being compared. This allows a reduction in amplitude of the sum of currents I_{BASE} + I_{TH} used for comparison and limits the overall power dissipation. But at the same time it decreases the amplitude of the current pulses and as a consequence, it is more difficult to make the difference between the data and erratic signals in a noisy environment.

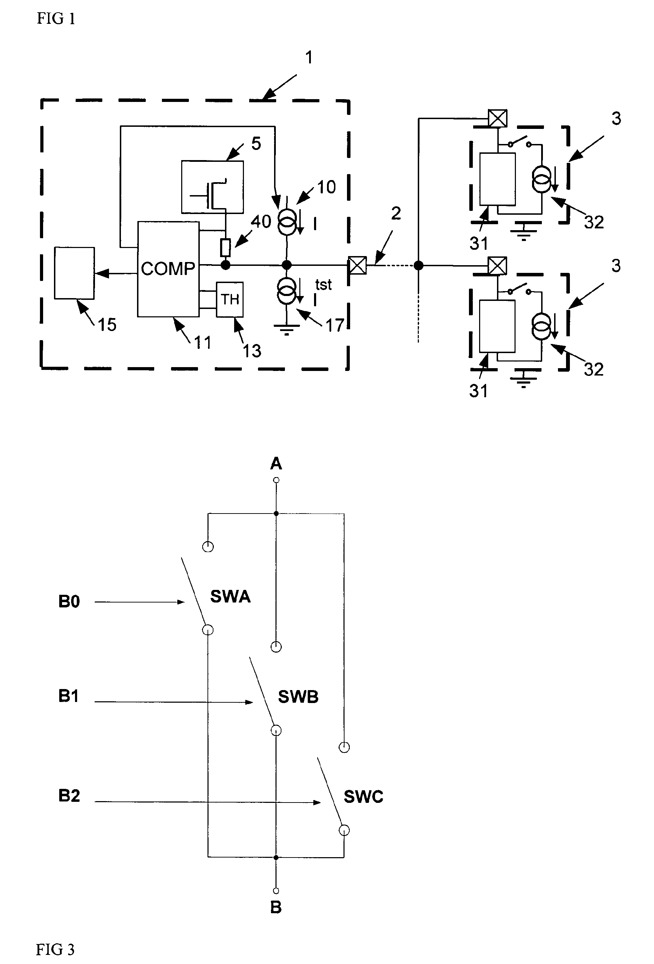

Figure 1 shows a first embodiment. A node or terminal or satellite station **3** is connected through a supply line in the form of a transmission line **2,** to a main station. The satellite station is connected via the transmission line **2.** Two satellites stations are shown, many more could be coupled to the same and/or different line. The network has a power supply regulator 5, supplying current to the satellites. Optionally and preferably, this power regulator may be provided in the main station. A receiver is represented by a detector 11, a resistor 40, and a subtractor 10. This resistor can be an active (e.g. a transistor) or a passive component (e.g. simple resistor). It can be located in series with the supply line either coupled below the power supply regulator (as illustrated in the figures) or above the regulator (connected to the supply). Two inputs to a detector in the form of comparator 11 are provided from either side of the resistor. This means a voltage across the resistor represents the current being supplied, and any data pulses on the line. The comparator compares this to a reference threshold shown by threshold 13. An output of the comparator is fed to decoder 15 to decode the data from the satellites. A subtractor for subtracting the current supplied is shown by the current source 10. This is preferably controlled to follow changes in supplied quiescent current by a control signal from the comparator which represents a measure of the current when the comparator detects there is no data pulse. Another current source 17 represents a way of generating test pulses to simulate data from a satellite to verify the operation of the receiver.

Each satellite shows a sensor 31 which consumes some current supplied along the line, and controls a switch to generate pulses by switching in a current source 32. Other arrangements can be conceived.

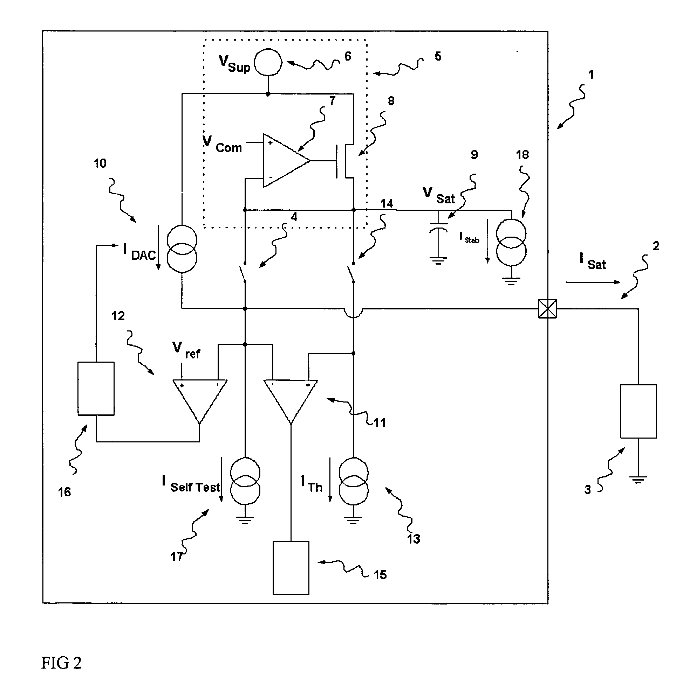

Figure 2 shows a second preferred embodiment of present invention. As in fig 1, satellite station **3** is connected through transmission line **2** to a main station. Corresponding features shown in fig 1 have the same reference numerals. Instead of a resistance **40,** a switch **4** provides some impedance and is connected to a regulated voltage supply **5.** In an alternative embodiment, this switch can be above transistor **8,** coupled to its drain and directly connected to Vsup. The satellite supply voltage V_{Sat} is generated with differential amplifier **7,** transistor **8** and the supply **6** V_{Sup} that supplies the main station. The differential amplifier **7** amplifies the error signal V_{Com} - V_{Sat}, where V_{Com} is a command signal applied to the non inverting input of differential amplifier **7**, and drives the gate of transistor **8**. In normal operation, the amplifier **7** will keep V_{Sat} constant and equal to or very close to V_{Com}. In normal operation, the switch **4** is closed. Power is supplied to the satellite through the transmission line **2** at the voltage V_{Sat}.

When the satellite does not transmit data, i.e. in a so called idle current phase, a regulator **16** uses the output signal of comparator **12** to set the current source (counter + DAC) **10** at a level such that no current flows through the switch **4** i.e. the idle current of the satellite **3** is sourced by the current source (counter + DAC) **10**. All of the idle current must be supplied by the current source (counter + DAC) **10.** If part of the idle current is supplied through the switch **4**, it causes a voltage drop across that same switch **4** that is detected by comparator **12**. The regulator **16** polls the output of comparator **12** (at regular or irregular intervals of time) and if comparator **12** detects a voltage drop across switch **4**, an up/down counter in regulator **16** is incremented to increase the current I_{DAC} sourced by the current source (counter + DAC) **10**. If the current source (counter + DAC) supplies too much current, the input of comparator **12** is higher than V_{ref} and the up/down counter in regulator **16** is decremented. Use of an up/down counter guarantees that the variation of the current I_{DAC} are limited to an amount equivalent to a single current source (counter + DAC) LSB (Least Significant Bit) at a time. This is advantageous to limit the amount of EM (Electro Magnetic) radiations associated with time varying signals.

The input-value for the current source (counter + DAC) is defined during the idle-current phase and is kept constant during the pulsed-current phase. The following hang-up situation could occur. If e.g. the current supplied by the Idac is too low then it is possible that comparator 11 always detects a pulsed current phase. At that moment the current from the current source (counter + DAC) is no longer adjusted towards the idle current. To avoid this hang-up situation, the current is also adapted during the pulsed-current phase but with a much lower clock for the up-down counter. In this way the hang-up situation can be avoided and the change of the idle current during the pulsed current phase stays low.

When the current source (counter + DAC) 10 is set to generate the idle current, the only current flowing through transistor **8** is I_{TH}. To prevent the feedback loop introduced by the amplifier **7** becoming unstable, one may, among other things, choose I_{TH} to be sufficiently large or if that is not possible add a current source **18** to force a sufficiently large current through transistor **8.** Another possibility is to change the voltage for the positive input of comparator 12. By decreasing this voltage it is possible to guarantee a minimum current through switch **4.** This can avoid the need for the addition of an extra current source 18. The current Ith can then be increased with the same amount to keep the correct threshold level for comparator 11.

The value of the current source (counter + DAC) is also a good diagnosis tool for the sensor line 2. Too low a current can indicate loss of one of the sensors or an important leakage path to the supply. Too high a current can indicate a too high consumption of the sensor or an important leakage path to ground. It is then up to the main station to take the appropriate decisions.

When data is transmitted over the transmission line in the form of current pulses, those current pulses flow through the switch **4.** The voltage drop across switch **4** is proportional to the amplitude of the current pulses only and is monitored with the comparator **11.** The reference used for the comparison by comparator 11 is generated by a current I_{TH} flowing through the closed switch **14.**

The current I_{TH} is generated by a current source (e.g. a current source (counter + DAC) to even adapt the threshold to different possible amplitudes of the current pulses) **13.** I _{TH} is set so that to each current pulse on the transmission line **2** corresponds a voltage pulse at the output of comparator **11.** In particular, if switches **4** and **14** are identical, I _{TH} may be taken equal to half the amplitude of the current pulses. The voltage pulses at the output of comparator **11** are used by a decoder **15** to decode the data.

Switches **4** and **14** may have identical dimensions or different dimensions. Temperature and the tolerance of the fabrication process both have an impact on the ON resistance of switches **4** and **14.** If the voltage drop across the switches is too small, i.e. if the on resistance of both switches drops below a minimum (because of variations in the parameters of fabrication, temperature drift, ...) or if the amplitude of the current pulses decreases from one application to another..., correct operation of the comparator **11** may be jeopardized (the overdrive for which the comparator has been designed may become smaller than required for correct operation) and it may be desirable to increase that resistance by decreasing the size of the switches.

To be able to do so after fabrication of the circuit, one may use switches split into elementary switches that are connected in parallel as seen in fig. 3. If, for instance, the switches SWA, SWB and SWC connected in parallel have on resistances equal to RON, RON and RON/2 respectively, it is possible to tune the ON resistance between terminals A and B in the interval 1/4 RON to RON as a function of the binary signals B0, B1 and B2. If the voltage drop across switch **14** is insufficient or excessive, it can be increased or decreased by modifying the binary code (B0, B1, B2).

The current source **17** I_{Self} Test is activated conditionally by a command signal (not shown on fig. 1 or 2). It is activated to generate a current pulse with an amplitude equal to that of the data current pulses sent by the satellite. Current source **17** may be either used to verify operation of the demodulation circuit or to diagnose malfunctions. An example of such a malfunction is the presence of a high capacitive or inductive load that either filter out the current pulses or corrupt the timing of the signals: the main station may be able to detect that the satellite sends information but so distorted by a parasitic capacitive or inductive load that the satellite is unable to interpret that information. To help find out the cause of the malfunction, the current source **17** is activated and used to generate a known message. If that message is interpreted correctly by the main station, it means that the demodulation circuit is operating correctly and that the cause of the malfunction must be sought elsewhere.

Some main stations will integrate several sensor-interfaces in the same silicon. In this case it would save cost when some blocks could be common for the different sensor-interfaces. This becomes possible when switch 4 is placed at the drain of switch 8 instead of at the source. This means that switch 4 and 14 will be connected to the supply Vsup. An advantage is that switch 14, Ith can be common for all sensor interfaces.

Communication between main station and the sensors is possible through voltage pulses at the sensor-lines. These slope-controlled pulses can be applied through the input of the regulator Vcom. An extra pull down current may be useful to discharge capacitive loads at the sensor-lines.

As has been described above, a main station is provided for a system having one or more satellite stations coupled by a power supply line, for sending pulsed data signals along the power supply line. A power supply, e.g. in the main station supplies the satellite stations along the supply line, and the main station has a receiver having a comparator. In the receiver, a power source such as a current source subtracts a part or the full supply power, e.g. the supply current from the received signal before it is input to the comparator. By such subtraction of the power supply current, the received data signals are enhanced and the detection is made easier and more reliable in a noisy environment such as in automotive electronics. The current source is varied according to variations in the supply current of the satellite stations so that the remaining signal only represent the data signal sent by the satellite stations. The current source has an up down counter and a digital to analog converter to enable the rate of change to be controlled. By subtracting the current before comparison, the pulses are isolated or separated from the supply current which allows an improvement in the dynamic range of the comparators. Further, the split between idle current and pulsed current allows a major improvement in EMI performance. The noisy signal of the power supply line is handled directly at the input of the main station and any HF-coupling to the rest of the circuit can more easily be avoided. Another additional feature, is obtained by the switch 4 in the embodiment of figure 2. The switch 4 allows a fast isolation of the inner circuitry of the main station from the transmission line 2. Opening the switch 4, which can happen relatively fast, puts the connection to the transmission line 2 at a high impedance. This could be wanted in case of short between the transmission line 2 and ground or any other supply-line or in case of high voltage disturbance coupled capacitive or inductive into the wiring between main station and satellites.

The stability of the regulator usually requires some minimum current. This can be solved through Ith, using the extra current-source 18 or using a lower reference input for comparator 12 so that the idle current through switch 4 will never go to zero.

Sizes of the switches can be tuned by measuring the voltage drop across switch 14. Too low a voltage will show a need for smaller switches. Too high a voltage drop will lead to bigger switches (or more switches parallel). In case of several of several sensor-interfaces in the same circuit, it becomes more useful to connect the switches 4 and 14 between the supply Vsup and the drain of switch 8. This can enable sharing of more blocks between the different interfaces.

Communication from main station 1 to the sensor in satellite 3 is possible through voltage pulses. These pulses need slope controlled edges. This can be realized by applying voltage controlled pulses at the input of the supply regulator (signal Vcom). This can be useful for controlling the sensors or activating other functions of satellites.

I self test: This current source allows diagnosis of the sensor-lines and the analog path of the sensor-interface.

Use of an up-down counter for the current-DAC gives several advantages:
1. Small changes in voltage drop across the switches (defined by LSB).
2. Disturbances will have no major effect on the measured idle current.
3. Changing the clock of the up-down counter allows fast settling and afterwards slow tracking.
4. Slower clock during dominant current (pulsed current phase) will avoid hang-up situation.

Clearly there are other ways the current or voltage can be measured and other types of comparator that can be used, such as multi level devices. The comparator could compare voltages or currents. It is important to note that the current can be measured above or below the regulator of the supply circuit. In other words, a resistive part for converting current into a voltage, could be implemented by a passive or active component (as shown by switch 4) and can be situated in the source (as shown) or the drain of the transistor (8 in figure 2).

Other variations can be conceived within the scope of the claims.

## Claims

1. A main station (1) for a system having one or more satellite stations (3) coupled by a power supply line (2), each satellite station having a circuit for sending pulsed data signals along the supply line, the main station having a DC power supply circuit (5) for supplying the satellite stations along the supply line, and a receiver for receiving the pulsed data signals on the power supply line from the satellite stations, the receiver having a detector (11) arranged to detect the pulsed data signals, **characterized by** the receiver having a circuit (10) arranged to subtract at least some of the power supply signal from the received signal before it is input to the detector.

2. The station of claim 1, the detector comprising a comparator (11) for comparing the pulsed data signal to a threshold.

3. The station of claim 2, the subtractor comprising a current source (10) coupled to the power supply circuit for subtracting a value representing a part or full quiescent supply current from an input to the detector.

4. The station of claim 3, the current source being variable according to a current drawn by the satellite stations.

5. The station of claim 4, the current source comprising an up down counter and a digital to analog converter.

6. The station of any preceding claim having a test circuit (17) coupled to the supply line for supplying a test data signal.

7. The station of any preceding claim, the system being suitable for automotive use, and the main station being implemented as an integrated circuit.

8. The station of any preceding claim having a data signal transmitter (5) arranged to modulate a command input to the power supply circuit to send data along the supply line to the satellite stations.

9. A system including a main station, the system having one or more satellite stations coupled by a power supply line, each satellite station having a circuit for sending pulsed data signals along the power supply line, the system having a DC power supply circuit for supplying the satellite stations along the supply line with a power supply signal, and the main station having a receiver for receiving the pulsed data signals on the supply line from the satellite stations, the receiver having a detector arranged to detect the pulsed data signals, **characterized by** the receiver having a circuit arranged to subtract at least some of the power supply signal from the received signal before it is input to the detector.

10. A receiver for use with the system of claim 9 and for receiving the pulsed data signals on the supply line from the satellite stations (3), the receiver having a detector (11) arranged to detect the data signals, **characterized by** the receiver having a circuit (10) arranged to subtract at least some of the power supply signal from the received signal before it is input to the detector.

11. The receiver of claim 10, the subtractor circuit comprising a current source (10) coupled to the power supply circuit for subtracting a value representing a quiescent supply current from an input to the detector.

12. The receiver of claim 11 connected to the power supply line (2) and with the input of the detector comprising a switch (4) so that the power supply line can be put to a high impedance by opening the switch (4).

13. A method of using a system having a main station (1) and one or more satellite stations (3) coupled by a power supply line (2), the method having the steps of supplying the satellite stations along the supply line from the main station with a DC power signal, sending pulsed data signals from a satellite station along the power supply line, receiving the pulsed data signals on the power supply line at the main station, detecting the pulsed data signals, and subtracting at least some of the power supply signal from the received signal before it is input to the detecting step.

14. The method of claim 13, having the step of using a current source (10) coupled to the power supply circuit for subtracting a value representing a quiescent supply current from an input to the detector.

15. The method of claim 14, further comprising the step of isolating an inner circuit of the main station from any electrical disturbance on the power supply line.
